(19)

Europäisches
Patentamt
European
Patent Office
Office européen
des brevets

(11)  **EP 2 491 795 A1**

(12)  **EUROPEAN PATENT APPLICATION**

(43) Date of publication:
**29.08.2012 Bulletin 2012/35**

(51) Int Cl.:
*A23K 1/16* (2006.01)      *A23K 1/175* (2006.01)
*A23K 1/18* (2006.01)

(21) Application number: **11155423.4**

(22) Date of filing: **22.02.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Süd-Chemie AG
80333 München (DE)**

(72) Inventor: **Villaurrutia, Erik Thomassiny
72410 Puebla, Pue. (MX)**

(74) Representative: **Stolmár Scheele & Partner
Blumenstraße 17
80331 München (DE)**

(54)  **Feed additive**

(57)  The invention relates to a feed additive comprising a clay material and at least one saponine deposited thereon, a method for producing the feed additive as well as its use as additive to livestock feed and a feed product comprising the feed additive.

**EP 2 491 795 A1**

**Description**

The invention relates to a feed additive, a method for producing said feed additive, a feed comprising said feed additive and the use of said feed additive as additive to poultry feed. The feed additive may significantly reduce ammonia concentration in the manure of the animals kept and subsequently in the air of the breeding houses.

Commercial breeding of livestock is usually performed in livestock breeding houses, where large numbers of animals are kept in cages or as a group in pens. The excrements produced by the animals collect rapidly and due to the warmth and the moisture present in the breeding houses start rapidly to decay. Since the excrements of livestock are rich in nitrogen compounds large amounts of ammonia are released that accumulate in the air inside the breeding houses. The ammonia concentration can reach levels up to 90 ppm. The ammonia has a high alkaline character and easily forms complexes with metals like iron and aluminium. Livestock therefore often show respiratory complications at ammonia concentrations of more than 25 ppm and at levels of more than 40 ppm the growth performance of young animals is reduced. Further, due to the weakening of the health of the animals by the impact of high ammonia concentrations a disease experienced by few animals can easily spread through a large number of other animals by contaminated litter which the animals ingest.

Within the state of the art and in order to create a favourable environment for the livestock, litter products have been developed that also act as an adsorbent for the ammonia produced.

In US 5,960,743 is described a sulphuric acid-containing clay-based litter product useful in the control of ammonia generated by decaying excrement in poorly ventilated poultry breeding houses. A raw clay is contacted with sulphuric acid to produce an acidulated clay which is then applied to the poultry brooding house floor. The raw clays used for the clay litter product can be from the hormite mineral group, the smectite mineral group and mixtures thereof. The hormite group of minerals includes the palygorskite and sepiolite varieties which have silicate ring, ribbon or chain structures. The smectite mineral group includes the montmorillonites, nontronites, hectorite and saponite varieties, which are constituted by stacked layers of an octahedral sheet of alumina and one or more sandwiching tetrahedral sheets of silica. Other minerals not belonging to the hormite or smectite groups which also may be included in the raw clay are opal, apatite, calcite, feldspar, kaolinite, mica, quartz and gypsum, amongst others. According to a preferred embodiment montmorillonite clay is used as the raw clay. The sulfuric acid content of the acidulated clay is at least about 15 percent by weight and is preferably in the range of from about 25 to about 35 percent by weight. The acidulated clay product can be applied directly to the existing floor bedding or litter in pens of poultry breeding houses.

Within the EP 10 160 306.6 a litter product comprising a clay material with a mixture of an acid and at least one aluminium salt deposited thereon is described. This litter product shows a much improved absorbance capacity compared to litter products so far known within the state of the art.

There are, however, several drawbacks associated with litter products. On the one hand, the absorbance capacity is often very low. Further, a part of the ammonia firstly gets into the air before the rest is absorbed by the litter. On the other hand, the amount of litter to be used to guaranty a satisfactory ammonia absorbance is quite high.

The object to be solved by the invention is to provide a product, which already diminishes the production of ammonia by the animal. In particular, the object of the present invention is to provide a feed additive that has a high binding capacity for alkaline compounds, in particular nitrogen containing compounds like ammonia, and further has a high drying capacity, such that the amount of ammonia present in the atmosphere of a livestock breeding house can be kept at low levels and the animals can be kept at good health and spreading of diseases can be diminished. Further, the object of the inventors of the present invention was to provide a product which has moreover additional health benefits and overall leads to a higher productivity of a breeding or fattening farm.

This object is solved by a feed additive according to claim 1. Preferred embodiments of said feed additive are defined in the depending claims.

In a first aspect, the present invention therefore relates to a feed additive comprising a clay material and at least one saponine deposited thereon.

The term "feed additive" according to the present invention is to be understood as an ingredient or a mixture or combination of ingredients which can be mixed to a feed to fulfill one or more specific need(s).

A "saponine" in the sense of the present invention is a compound, usually a secondary metabolite, found in natural sources, in particular in various plants but also in marine species. Specifically, saponins are amphipathic glycosides grouped phenomenologically by the soap-like foaming they produce when shaken in aqueous solutions, and structurally by their composition of one or more hydrophilic glycoside moieties combined with a lipophilic triterpene derivative.

The aglycone (glycoside-free portion) of a saponine is termed sapogenine. The number of saccharide-chains attached to the sapogenin/aglycone core can vary, as can the length of each chain. A typical chain length is from 1 to 11, with the numbers 2 to 5 being the most frequent, and with both linear and branched saccharide-chains being represented. Monosaccharides such as D-glucose and D-galactose are among the most common components of the attached chains.

The lipophilic aglycone can be any one of a wide variety of polycyclic organic structures originating from the serial addition of ten-carbon (C10) terpene units to compose a C30 triterpene skeleton, often with subsequent alteration to produce a C27 steroidal skeleton. The subset of saponins that are steroidal have been termed saraponins; these saraponins are also encompassed by the term "saponine" according to the present invention.

Within the present invention "the at least one saponine" can be derived from any source known to a person skilled in the art as suitable for the inventive purpose. Thus, the at least one saponine can be plant-derived, but it can also be isolated from marine organisms. Saponins can for example be found in the botanical family Sapindaceae, with its defining genus *Sapindus* (soapberry or soapnut), and in the closely related families Aceraceae (maples) and Hippocastanaceae (horse chestnuts). It can also found heavily in gynostemma pentaphyllum (Genus *Gynostemma,* Family Cucurbitaceae) in a form called gypenosides, and ginseng (Genus Panax, Family Araliaceae) in a form called ginsenosides. Within these families, this class of chemical compounds are found in various parts of the plant: leaves, stems, roots, bulbs, blossom and fruit. Further, saponins can be extracted from the soapwort plant (Genus *Saponaria,* Family Caryophyllaceae) and from the soap bark (or soapbark) tree, *Quillaja saponaria,* and from yucca plants (Genus Yucca). Saponins extracted from Yucca plants are preferred for the inventive purpose, whereas saponins extracted from *Yucca Schidigera* is particularly preferred. Further, artificially produced saponins are also suitable for the inventive purpose.

According to the invention, at least one saponine deposited onto the clay is preferably a saponine derived from the Yucca plant, particularly preferred from *Yucca Schidigera.* Within the scope of the present invention, however, two or more different saponins from the same or different sources can be deposited onto the clay material.

Particularly preferred the at least one saponine is comprised in the feed additive in an amount of from 1 to 50 wt%, according to a preferred embodiment in an amount of from 5 to 45 wt% and according to a particular preferred embodiment in an amount of from 10 to 30 wt%, whereas from 15 to 25 wt% are most preferred. The amount of saponine is calculated as the weight difference of the clay material before and after the mixing with the saponine containing extract (when mixing at room temperature, 21 °C) and the percentage refers to the weight of the dry clay.

The "clay material" comprised in the feed additive may be a raw clay or may be a clay activated by a corresponding activation procedure, e.g. by acid leaching of a raw clay to increase pore volume and specific surface area of the clay. A raw clay is understood to be a clay as mined from a natural source. Such raw clays have a composition and a crystal lattice as found in nature. Typical examples of a crystal lattice as found in raw clays from natural sources is a layered structure. Such alumosilicates comprise sheets formed of $AlO_4$- and $SiO_4$-tetrahedra. Within a sheet each tetrahedron shares three of its vertex oxygen atoms with other tetrahedra forming a hexagonal array in two dimensions. The forth vertex is not shared with another tetrahedron and all unshared vertices point to the same side of the sheet. The tetrahedral sheets are bonded to octahedral sheets formed of aluminium or magnesium cations coordinated by six oxygen atoms. Depending on the way that tetrahedral and octahedral sheets are packaged into layers clays are categorized in 1:1 clays having only one tetrahedral and one octahedral sheet in each layer and 2:1 clays having two tetrahedral sheet and one octahedral sheet per layer.

The mined clay may be dried and milled but has not undergone a treatment with a chemical compound, in particular an acid. Preferably, raw clays are used as component of the feed additive.

Preferably, clay materials having a high liquid uptake capacity are used in the feed additive according to the invention.

According to an embodiment, the raw clay can be from the hormite mineral group, the smectite mineral group or may comprise mixtures of such clays. The hormite group of minerals includes palygorskite and sepiolite varieties. The smectite mineral group includes the montmorillonites, nontronites, hectorite, and saponite varieties. Such clay minerals may comprise other minerals in minor amounts of preferably less than 30 weight percent, particularly preferred less than 20 weight percent. Examples for such mineral components are feldspar, mica, quartz, apatite and gypsum, amongst others. However, also other clay minerals may be used.

Particularly preferred clay materials have a specific surface area (BET) of at least 180 m$^2$/g, particularly preferred have a surface area within the range of 190 to 250 m$^2$/g and according to a further embodiment have a surface area within a range of 200 to 230 m$^2$/g. Further preferred are clay materials having a very large pore volume of at least 0.4 ml/g, more preferred 0.5 to 0.9 ml/g. Particular preferred as clay material are raw clays having a specific surface area and a pore volume within the above mentioned ranges.

For achieving thorough adsorption of basic compounds by the feed additive according to the invention it is preferred to use clay materials having ion exchange capacity. According to a further preferred embodiment, the clay material comprised in the feed additive according to the invention has a cation exchange capacity of at least 40 meq/100 g, according to a further embodiment has a cation exchange capacity of at least 45 meq/100 g. According to a preferred embodiment, the cation exchange capacity of the clay comprised in the feed additive has a cation exchange capacity of less than 150 meq/100 g, according to a further embodiment has a cation exchange capacity of less than 100 meq/100 g and according to a still further embodiment has a cation exchange capacity of less than 70 meq/100 g.

Particularly preferred are raw clays from natural sources with a low sediment volume in water. According to an embodiment, the sediment volume of the clay in water is less than 15 ml/2 g, according to a further embodiment is less than 12 ml/2 g and according to a still further embodiment is less than 10 ml/2 g.

Particularly preferred are raw clays from natural sources that have a low sediment volume in water, a high pore volume, a high specific surface area and still have some cation exchange capacity. Preferably, the raw clays have a sediment volume in water, a pore volume, a specific surface area and a cation exchange capacity within the above mentioned ranges.

Recently, the valuable nature of a particular class of clays has been recognized. Such clays have an amorphous structure according to XRD data and further are characterized by a quite high content of $SiO_2$ and a low content of $Al_2O_3$. According to an embodiment, the raw clay comprised in the feed additive according to the invention comprises silicium, calculated as $SiO_2$, in an amount of more than 60 wt%, according to a further embodiment of more than 65 wt% and according to a still further embodiment in an amount of at least 70 wt%. According to an embodiment the amount of silicium, comprised in the raw clay, calculated as $SiO_2$, is less than 90 wt%, according to a further embodiment is less than 85 wt% and according to a still further embodiment is less than 80 wt%.

The amount of aluminium contained in the raw clay comprised in the feed additive according to the invention, calculated as $Al_2O_3$, is preferably less than 20 wt%, according to a further embodiment is less than 15 wt% and according to a still further embodiment is less than 12 wt%. According to an embodiment, the amount of aluminium, calculated as $Al_2O_3$, comprised in the raw clay is more than 5 wt%, according to a further embodiment is more than 7 wt%. All percentages refer to dry clay.

Without wishing to be bound by that theory, the inventors believe, that such raw clays have a structure comprising a rigid three-dimensional network formed of $SiO_2$ with very small particles of a layered alumosilicate embedded in the rigid $SiO_2$ network structure. This structure explains the high surface area and the large pore volume of the preferred raw clay which is similar to pore volumes and specific surface areas experienced with acid leached clays which also comprise a rigid network formed of $SiO_2$. The inclusion of small platelets of a layered alumosilicate within the rigid $SiO_2$ network structure would provide an explanation for the cation exchange capacity as measured for the preferred clay minerals which is considerably higher than measured for acid leached clays as used e.g. for oil bleaching. Such clays have an exceptionally high capacity for liquid uptake. Suitable clay materials are described e.g. in WO 2006/131136 and WO 2008/055675 A1.

Such preferred clays may also comprise iron in an amount, calculated as $Fe_2O_3$ of between 1 to 5 wt%, according to a further embodiment in a range of 2 to 3.5 wt%. Such iron ions are fixed in the crystal lattice of the clay and may not leached from the mineral by simply washing with water or highly diluted acid at room temperature. A diluted acid preferably is less than 1N and according to an embodiment has a normality in the range of 0.1 to 1N.

The feed additive preferably is provided in granular form, wherein the granules preferably have an average diameter ($D_{50}$) of from 0.01 mm to 7 mm, preferably from 0.1 mm to 5 mm, and according to a preferred embodiment have a diameter of from 0.2 to 3 mm, according to a further preferred embodiment of from 0.3 to 2 mm. The size of the granules may be determined by sieving. The average diameter $D_{50}$ corresponds to a value wherein 50 wt% of the granules have a diameter of less than $D_{50}$ and 50 wt% of the granules have a diameter of more than $D_{50}$.

Due to the deposition of the at least one saponine the total pore volume of the feed additive is smaller than of the clay comprised in the feed additive. According to an embodiment the total pore volume of the feed additive is within a range of 0.2 to 0.5 ml/g, according to a further embodiment is within a range of 0.21 to 0.4 ml/g.

A further aspect of the invention is directed to a method for producing a feed additive as described above. To obtain a feed additive according to the invention, a clay material is provided and at least one saponine is deposited onto the clay. The present invention therefore also relates to a method of producing the feed additive as defined before, comprising the step

- mixing at least on clay material with at least one saponine.

The clay material and the at least one saponine have been described above. Reference is made to the corresponding passages.

To deposit the at least one saponine onto the clay material, the clay material is preferably provided in a suitable form. To allow an even distribution of the at least one saponine onto the clay material, according to a preferred embodiment, the clay material is provided in the form of larger particles, e.g. by breaking larger lumps of clay to particles of a diameter of within a range of 0.01 mm to 7 mm. However, according to another embodiment, the clay material is provided in the form of a fine powder having a medium particle size ($D_{50}$) of preferably within a range of 50 to 500 $\mu$m.

The at least one saponine is then deposited onto the clay material by mixing the clay material and the at least one saponine, e.g. by spraying a solution containing the at least one saponine onto the clay material. Within the present invention it is also possible to mix the clay material with the at least one saponine by combining a solution e.g. an extract containing the at least one saponine with the clay material in a batch and stirring the mixture for a time sufficient for the at least one saponine to be deposited onto the clay material and subsequently remove the excess of the solution from the clay material with the deposited saponine. In a particular preferred embodiment the at least one saponine is applied within a concentrated extract, whereas the extract has been previously been concentrated to a concentration of preferably from 20 to 70 °Brix, more preferred from 30 to 60 °Brix and most preferred from 45 to 55 °Brix, whereas 50 °Brix are regularly successfully used within the method of the present invention. When applying the saponine containing extract in such a concentrated form, no excess material or solution has to be removed after the mixing step and thus less time and costs have to be spent.

Within a further preferred embodiment of the method according to the present invention, the saponine is applied in form of a dried and pulverised extract. According to a further embodiment, the clay material may be provided in the form of a ductile mass and the at least one saponine is mixed with the clay material by kneading.

In case the clay material is provided in form of a powder, the powder particles are formed or agglomerated to bigger granules, preferably of a size from 0.01 mm to 7 mm after the deposition of the at least one saponine has taken place. The agglomeration can be carried out according to any method known to a person skilled in the art.

In a further preferred embodiment the mixing is carried out at room temperature (21 °C), it is, however, generally preferred to mix at a temperature from 15 to 35 °C, preferably from 20 to 25 °C.

According to a preferred embodiment, the solution comprising the at least one saponine is also used as the granulation liquid. Thus the formation of the granulate from the clay material and the deposition of the at least one saponine can be carried out within one step.

The granulation process is carried out according to granulation methods known to a person skilled in the art. According to a preferred embodiment, the clay material is provided in a mixer, e.g. an Eirich mixer, in the form of a dry fine powder. Within a preferred embodiment the clay material in powdery form or in form of particles with an average size below 0.01 mm is moved e.g. by a stirrer and a solution containing the at least one saponine is poured or sprayed onto the clay material while mixing is continued. The mixing speed is then adopted such and continued until agranulate of suitable size and hardness is formed. The solution comprising the at least one saponine is preferably a watery and/or alcohol containing extract from a saponine containing plant or marine organism. The amount of solution containing the at least one saponine is preferably 40 weight-% (relative to the weight of the clay material)and the solution is further preferred an extract concentrated to 50 °Brix and most preferably an extract originating from *Yucca Schidigera.*

After deposition of the at least one saponine onto the clay material eventual excess humidity can be removed, e.g. by heating the feed additive or by blowing heated air onto the feed additive while continuing mixing of the same.

The feed additive may then be packed into suitable packaging, e.g. a drum or a bag, to be shipped to a customer.

The feed additive according to the invention has a high capacity for absorption of basic compounds, in particular nitrogen containing compounds and basic gases, e.g. ammonia.

The basic compound may be provided in gaseous form or may be provided in liquid form, preferably in form of a solution, in particular an aqueous solution or may be provided in the form of a suspension or a ductile mass, e.g. in the form of excrements.

The basic compound preferably comprises at least one nitrogen atom and in particular is an amine or ammonia.

The feed additive according to the invention can absorb large amounts of these basic compounds. Further, the feed additive according to the invention is also capable to absorb further compounds such as mycotoxins or toxins from bacteria.

The feed additive therefore is suitable for reducing e.g. the ammonia concentration but also mycotoxin concentration in the manure of livestock when given to the feed of the livestock.

Therefore, the amount of ammonia getting into the air is substantially reduced. This contributes also to the health of the animal. As a consequence, when applying the feed additive of the present invention to the feed of e.g. broiler chickens, meat production is increased. In addition the health of the animal is further improved by the (myco) toxin absorbing effect of the feed additive leading concurrently to less toxin-contaminated meat.

Without wanting to be bound by theory, the ammonia reducing effect of the feed additive of the present invention is thought to be due to - on the one hand - that the ammonia will already be absorbed within the animal. On the other hand nitrogen and nitrogen-containing compounds will be absorbed before being transformed to ammonia. Further, it has been observed that the meat production of broiler chickens fed with the feed additive of the present invention is increased and the meat comprises a higher amount of proteins and less nitrogen is excreted with the manure. The inventors of the present invention believe that this effect is due to the fact that the nitrogen is used to produce more muscular mass leading also to a higher quality meat product.

In a further aspect, the present invention is therefore also directed to the use of the feed additive as defined before as additive to livestock feed. In a preferred embodiment, the livestock is selected from poultry such as chicken, geese, turkeys, ducks and from pigs, from cattle and from sheep, whereas the feed additive according to the present invention is particularly suitable and beneficial for poultry.

The feed additive according to the invention can be fed in combination and mixture with any kind of feed suitable for the respective livestock but can also be fed separately. It is, however, preferred that the feed additive is fed in a homogenous mixture with the regular fattening feed.

The amount of feed additive used with the livestock feet is preferably from 10g/ton feed to 100kg/feed, more preferred from 100g/ton feed to 10 kg/ton feed and most preferred from 750 g/ton feed to 5 kg/ton feed whereas regularly an amount of 1kg/ ton feed is used.

In another aspect the present invention is directed to a feed product comprising the feed additive as defined before.

As feed any kind of feed known as suitable feed for livestock can be used.

In a preferred embodiment of the present invention the feed used comprises at least one of the following components selected from cereal products, protein raw material, fibre raw material and lignocelluloses-containing raw material.

As cereal product any cereal known to a person skilled in the art as suitable as a feed ingredient can be used. In a preferred embodiment the cereal product is selected from corn, barley, oat, rye, sorghum, wheat and mixtures thereof either used as whole grains or milled or shredded. Further possible additional or alternative cereal products are husks of oat, wheat, sorghum, barley and rye and starch.

As protein raw material any protein containing material known to a person skilled in the art as suitable as a feed ingredient can be used. In a preferred embodiment the protein raw material is selected from bone meal, meat meal, soya derived products such as shredded soya beans, vegetable meal and fish meal.

As fibre raw material any fibre containing material known to a person skilled in the art as suitable as a feed ingredient can be used. In preferred embodiment the fibre raw material is selected from husks of oat, wheat, sorghum, barley and rye as well as straw and any mixture thereof.

As lignocelluloses-containing raw material any lignocelluloses-containing material known to a person skilled in the art as suitable as a feed ingredient can be used. In preferred embodiment the lignocelluloses-containing raw material is selected from wood, preferably birch wood.

In a further preferred embodiment the feed product may also comprise at least one component selected from trace elements, vitamins, tallow, enzymes, Calcium and mineral(s) containing additives such as milled egg shells or oyster-shell meal. Preferred vitamins are vitamin A, B, E, D, H and C and mixtures thereof. Preferred enzymes are cellulose, cellobiase, hemicellulase, xylanase, glucanase, amylase and mixtures thereof.

**Examples**

The following examples and comparative data further illustrate the invention. It is emphasized that the examples are for an illustrative purpose only, thus they do by no limit or restrict the scope of the present invention.

Example 1

Characterisation of the clay material

A raw clay suitable for preparation of a feed additive for adsorption of ammonia (Tonsil® Supreme 526 FF, Sud-Chemie de Mexico S.A. de C.V.) was analysed towards its physical features. The data are presented in table 1.

Table 1: Analysis of raw clay materials

| clay material | Tonsil® Supreme 526 FF |
|---|---|
| specific surface (BET) ($m^2/g$) | 209 |
| pore volume (ml/g) | 0.593 |
| cation exchange capacity (meq/100 g) | 50 |
| sediment volume in water (ml/2g) | < 8 |
| silicate analysis (wt.-%) | |
| $SiO_2$ | 72.5 |
| $Fe_2O_3$ | 3.0 |
| $Al_2O_3$ | 9.6 |
| CaO | 2.1 |
| MgO | 2.7 |
| $Na_2O$ | 1.1 |
| $K_2O$ | 1.1 |

(continued)

| clay material | Tonsil® Supreme 526 FF |
|---|---|
| $TiO_2$ | 0.38 |
| ignition loss (2h, 1000 °C) | 6.9 |
| Total | 99.38 |

Further, the raw clay characterized in table 1 has been analysed as to its pore volume and the percentage of the pore volume formed by pores of a defined diameter. The results are summarized in tables 2a - 2c.

Table 2a: relative amount of the total pore volume formed by pores of a defined diameter (%)

| diameter (Å) | 0 - 75 | 0 - 140 | 0 - 250 | 0 - 800 | > 800 |
|---|---|---|---|---|---|
| Tonsil® Supreme 526 FF | 17.1 | 33.9 | 57.0 | 87.9 | 12.0 |

Table 2b: relative amount of the total pore volume formed by pores of a defined diameter (%)

| diameter (Å) | 0 - 75 | 75 - 140 | 140 - 250 | 250 - 800 | > 800 |
|---|---|---|---|---|---|
| Tonsil® Supreme 526 FF | 17.1 | 16.8 | 23.1 | 30.9 | 12.1 |

Table 2c: relative amount of the total pore volume formed by pores of a defined diameter (%)

| diameter (Å) | 0 - 75 | 75 - 800 | >75 | >140 | >250 |
|---|---|---|---|---|---|
| Tonsil® Supreme 526 FF | 17.1 | 70.8 | 82.9 | 66.1 | 43.0 |

Example 2

Preparation of the feed additive

The raw clay material characterised in example 1 (Tonsil® Supreme 526 FF, Sud-Chemie de Mexico S.A. de C.V.) was wet purified and then dewatered in a filter press.

The filter cake was then dried and milled at 10 - 14 % moisture content and 30-35 % residue on 63 microns mesh.

The milled powder of the clay is then blended at a proportion of 60 parts clay with 40 parts saponine-containing extract ( 50 +/- 2.0 °Brix) from Yucca Schidigera (Bioliquid 500; Agroin, BAIA AGRO INTERNATIONAL S.A. de C.V.) in an industrial blender avoiding lumps bigger than 350 microns (M-45).

Example 3

Ammonia production of chicken

The chickens we fed *ad libidum* a commercial diet with the following common and commercially available feed products: pre-starter, starter, growth, finisher I and finisher II, with a commercial base-premix Premix GM® by Previtep and a commercial vaccination program:

incubator-stage: diseases Marek, Gumboro & Chickenpot - commercially available vaccinations by Merial; 1 day old: disease Newcastle- commercially available vaccinations by Avilab; 5 days old: disease Newcastle - commercially available vaccinations by Avilab; 7 days old: disease Gumboro - commercially available vaccinations by Boehringer; 13 days old: disease Newcastle - commercially available vaccinations by Avilab; disease Gumboro - commercially available vaccinations by Boehringer. The feed additive of example 2 was added to the feed of the houses 3 to 6 at each feeding stage in an amount of 1 kg/ ton feed. The chickens were housed in huts of 900 m$^2$ with 10 birds /

m$^2$ density.

The ammonia concentration was measured by mass flow measurement (Dräger CMS system with Gastec Tube detector commercial measuring pipettes number 3L for ammonia with measuring range 0.5 to 30 ppm. The results (ammonia concentration) in the air is shown in table 3a in ppm (parts per million).

Table 3a:

| House | No. chicken | amount additive | W1 | W2 | W3 | W4 | W5 | W6 | W7 |
|---|---|---|---|---|---|---|---|---|---|
| 1 | 8589♂ | 0.0 kg/ ton | 0 | 10 | 15 | 20 | 25 | 30 | 35 |
| 2 | 8560 ♀ | 0.0 kg/ ton | 0 | 10 | 15 | 20 | 25 | 30 | 35 |
| 3 | 8474 ♂ | 1.0 kg/ ton | 0 | 0 | 0 | 0 | 0 | 10 | 15 |
| 4 | 8680 ♀ | 1.0 kg/ ton | 0 | 0 | 0 | 0 | 0 | 10 | 15 |
| 5 | 8488♂ | 1.0 kg/ ton | 0 | 0 | 0 | 0 | 0 | 10 | 15 |
| 6 | 8472 ♀ | 1.0 kg/ ton | 0 | 0 | 0 | 0 | 0 | 10 | 15 |

From the results in table 3a it can be seen that chickens fed with the feed additive according to example 2 (houses 3 to 6) produced ammonia in a detectable amount from week 6 whereas the chickens not fed the feed additive (houses 1 and 2) produced ammonia from week 2. Altogether the ammonia produced by chickens of houses 1 and 2 rised to 35 ppm in week 7 whereas the chickens of houses 3 to 6 produced 15 ppm in week 7.

Further, the mortality rate of the chickens of houses 1 to 6 was measured during the 7 week trial. The results are shown in table 3b:

Table 3b:

| House | Chickens start | amount additive | Chickens final | Cumulative mortality | (%) mortality |
|---|---|---|---|---|---|
| 1 | 8589♂ | 0.0 kg/ ton | 8070♂ | 519 | 6.04 |
| 2 | 8560 ♀ | 0.0 kg/ ton | 8055 ♀ | 505 | 6.27 |
| 3 | 8474♂ | 1.0 kg/ ton | 7954 ♂ | 520 | 6.13 |
| 4 | 8680 ♀ | 1.0 kg/ ton | 8303 ♀ | 377 | 4.34 |
| 5 | 8488 ♂ | 1.0 kg/ ton | 8133 ♂ | 355 | 4.18 |
| 6 | 8472 ♀ | 1.0 kg/ ton | 8062 ♀ | 410 | 4.83 |

From the results of table 3b it can be seen that the mortality rate decreased up to about 2 percent for chickens fed with the feed additive of example 2. This is thought to be due to an overall improved health of the chickens by a significant reduction of the ammonia in the air and absorption of mycotoxins.

Further, the weight gain and feed intake during the 7-week trial period was measured. In addition the feed conversion rate and average weight gain was calculated. The results are shown in table 3c:

Table 3c:

| House | amount additive | Final weight gain (g) | Feed intake (g) | Feed conversion rate | Relative weight increase (%) |
|---|---|---|---|---|---|
| 1 | 0.0 kg/ ton | 2150 | 4751.5 | 2.21 | - |
| 2 | 0.0 kg/ ton | 1995 | 4229.4 | 2.12 | - |
| 3 | 1.0 kg/ ton | 2280 | 4674.0 | 2.05 | 6.0 |
| 4 | 1.0 kg/ ton | 2250 | 4725.0 | 2.10 | 12.7 |

EP 2 491 795 A1

(continued)

| House | amount additive | Final weight gain (g) | Feed intake (g) | Feed conversion rate | Relative weight increase (%) |
|---|---|---|---|---|---|
| 5 | 1.0 kg/ ton | 2350 | 4935.0 | 2.10 | 9.3 |
| 6 | 1.0 kg/ ton | 2235 | 4470.0 | 2.00 | 12.0 |

I can be seen from table 3c that chickens of houses 3 to 6 gained more weight during the 7-week trial period resulting in an up to 12.7 % improvement.

The results of table 3c lead to a calculated average meat production of each house as shown in table 3d:

Table 3d:

| House | Amount additive | Weight live chicken (kg) total | Difference produced at trial end (live chicken total (kg) ) |
|---|---|---|---|
| 1 | 0.0 kg/ ton | 17,350.5 | 0 |
| 2 | 0.0 kg/ ton | 16,069.7 | 0 |
| 3 | 1.0 kg/ ton | 18,135.1 | 784.6 |
| 4 | 1.0 kg/ ton | 19,681.7 | 3612.0 |
| 5 | 1.0 kg/ ton | 19,112.5 | 1762.0 |
| 6 | 1.0 kg/ ton | 18,018.5 | 1948.8 |

From the results in table 3d it can be seen that feeding the additive of example 2 will lead on an overall increase of meat produced up to 3612.0 kg (here for female chickens starting from 8680 birds of house 4 compared to 8560 birds (start) of house 1).

**Methods**

The physical features used to characterize the adsorbents according to the invention are determined as follows:

Specific surface / pore volume

Specific surface was measured by the BET-method (single-point method using nitrogen, according to DIN 66131) with an automatic nitrogen-porosimeter of Micrometrics, type ASAP 2010. The pore volume was determined using the BJH-method (E.P. Barrett, L.G. Joyner, P.P. Hienda, J. Am. Chem. Soc. 73 (1951) 373). Pore volumes of defined ranges of pore diameter were measured by summing up incremental pore volumina, which were determined from the adsorption isotherm according BJH. The total pore volume refers to pores having a diameter of 2 to 350 nm.

Moisture content

The amount of water contained in the adsorbents was determined at 105 °C according to DIN/ISO-787/2

Silicate analysis

The clay material was totally disintegrated. After dissolution of the solids the compounds were analysed and quantified by specific methods, e.g. ICP.

Ion Exchange capacity

The clay material to be tested was dried at 150 °C for two hours to obtain a dry clay material. Then the dried clay material was allowed to react under reflux with a large excess of aqueous $NH_4Cl$ solution for 1 hour. After standing at room temperature for 16 hours, the material was filtered. The filter cake was washed, dried, and ground, and the $NH_4$ content in the clay material was determined by the Kjedahl method. The amount and kind of the exchanged metal ions was determined by ICP-spectroscopy.

X-ray diffraction

The XRD spectra were measured with a powder diffractometer X'-Pert-MPD(PW 3040) (Phillips), equipped with a Cu-anode.

Determination of the sediment volume

A graduated 100 ml glass cylinder is filled with 100 ml of distilled water or with an aqueous solution of 1 % sodium carbonate and 2 % trisodium polyphosphate. 2 g of the compound to be analysed is placed on the water surface in portions of about 0.1 to 0,2 g with a spatula. After sinking down of a portion the next portion of the compound is added. After adding 2 g of the compound to be analysed the cylinder is held at room temperature for one hour. Then the sediment volume (ml/2g) is read from the graduation.

pH-Determination

A 10 wt.-% slurry of the dry clay material in destilled water is heated to the boiling point and then cooled to room temperature under a nitrogen atmosphere. The pH-value is determined with a calibrated glass-electrode.

Bulk density

A graduated cylinder which has been cut at the 1.000 ml mark is weighed to give $W_{tara}$. Then the sample is filled into the cylinder with the help of a powder funnel such that a cone is formed on top of the cylinder. The cone is removed with the help of a ruler and sample adhering to the outside of the cylinder is removed. The cylinder is then weighed again to give $W_{brutto}$. The bulk density is calculated as $d_{bulk} = W_{brutto} - W_{tara}$.

Free acidity

Approx. 5 g of the dried material (feed additive) are boiled in a 400 ml test beaker with 250 ml water for 10 min. Subsequently, the suspension is filtered. The filter cake is washed with a small amount of water. After the filtrate has been cooled down, it is titrated with 0.1N NaOH whereby the phenolphthalein is used as indicator. The calculation of the free acidity is as follows:

$$\text{Free Acidity (mg KOH/g)} = \frac{\text{Amount NaOH (ml)} \times 5.61}{\text{Initial weight (dry basis, g)}}$$

Total acidity

Approx. 2 g of the dried material (feed additive) are boiled in a 200 ml test beaker with 100 ml 10 wt% NaCl-solution for 10 min. Subsequently, the suspension is filtered. The filter cake is washed with a small amount of water. After the filtrate has been cooled down to room temperature (21 °C), it is titrated with 0.1N NaOH using phenolphthalein as indicator. The calculation of the total acidity is as follows:

$$\text{Total Acidity (mg KOH/g)} = \frac{\text{Amount NaOH (ml)} \times 5.61}{\text{Initial weight (dry basis, g)}}$$

Residual acidity

To obtain the residual acidity it is necessary to subtract the value of free acidity to the value of total acidity.

$$\text{Free Acidity (mg KOH/g)} = \text{Total Acidity} - \text{Free Acidity}$$

**Claims**

1. Feed additive comprising a clay material and at least one saponine deposited thereon.

2. Feed additive according to claim 1, wherein the clay material comprised in the feed additive as a specific surface area of at least 180 m$^2$/g.

3. Feed additive according to one of claims 1 to 2, wherein the clay material comprised in the feed additive has a pore volume of at least 0.5 ml/g.

4. Feed additive according to one of claims 1 to 3, wherein the feed additive has a granular form, wherein the granules preferably have an average diameter of from 0.01 mm to 7 mm.

5. Feed additive according to one of claims 1 to 4, wherein the saponine originates from a plant source selected from *Aceraceae, Hippocastanaceae, Cucurbitaceae, Araliaceae, Caryophyllaceae, Yucca, Quillaja.*

6. Method for producing a feed additive according to one of claims 1 to 5, comprising the step

   - mixing at least on clay material with at least one saponine.

7. Method according to claim 6, wherein the at least one saponine is contained within a watery and/or alcohol containing plant extract.

8. Method according to claim 6, wherein the at least one saponine is contained within dried and pulverized plant extract.

9. Feed, comprising the feed additive as defined in any of claims 1 to 5 and further comprising at least one component selected from cereal products, protein raw material, fibre raw material and lignocelluloses-containing raw material.

10. Feed according to claim 9, further comprising at least one component selected from trace elements, vitamins, tallow, enzymes.

11. Use of a feed additive according to one of claims 1 to 5 as additive to livestock feed.

EP 2 491 795 A1

Europäisches Patentamt
European Patent Office
Office européen des brevets

# EUROPEAN SEARCH REPORT

Application Number

EP 11 15 5423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 129 627 A1 (NOR FEED APS [DK]; DANSK IND SYNDIKAT [DK] NOR FEED AS [DK]; DANSK IND) 5 September 2001 (2001-09-05) * paragraph [0006]; claims 1,9-11 * | 1-11 | INV. A23K1/16 A23K1/175 A23K1/18 |
| X | KR 100 261 352 B1 (WOO SUNG FEED CO LTD [KR]) 1 August 2000 (2000-08-01) * abstract * | 1-11 | |
| X | DATABASE WPI Week 201061 Thomson Scientific, London, GB; AN 2010-L42779 XP002665691, & CN 101 803 674 A (UNIV QINGDAO AGRIC) 18 August 2010 (2010-08-18) * abstract * | 1-11 | |
| Y | US 5 140 949 A (CHU POCHEN [US] ET AL) 25 August 1992 (1992-08-25) * column 2, line 44 - line 64 * * column 3, line 10 - line 40 * * claim 1 * | 1-11 | |
| Y | US 2008/044548 A1 (HALE EDWARD C III [US]) 21 February 2008 (2008-02-21) * paragraph [0011] - paragraph [0012] * * paragraph [0027] * * paragraph [0032] * | 1-11 | TECHNICAL FIELDS SEARCHED (IPC) A23K |
| Y | DATABASE WPI Week 200820 Thomson Scientific, London, GB; AN 2008-C72392 XP002665692, & KR 2007 0046526 A (YUN Y B) 3 May 2007 (2007-05-03) * abstract * | 1-11 | |

-/--

The present search report has been drawn up for all claims

| Place of search | Date of completion of the search | Examiner |
|---|---|---|
| Munich | 13 December 2011 | Vermeulen, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

EP 2 491 795 A1

Europäisches
Patentamt
European
Patent Office
Office européen
des brevets

**EUROPEAN SEARCH REPORT**

Application Number

EP 11 15 5423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 91/10370 A1 (HULT GUNNAR [SE]; HULT MONICA [SE]; HULT LARS [SE]; HULT HANS [SE]; HU) 25 July 1991 (1991-07-25) * page 1, last paragraph - page 2, paragraph f * | 1-11 | |
| Y | GB 2 420 066 A (NOR FEED AS [DK]) 17 May 2006 (2006-05-17) * page 4, line 16 - line 30 * | 1-11 | |

TECHNICAL FIELDS
SEARCHED     (IPC)

The present search report has been drawn up for all claims

| Place of search | Date of completion of the search | Examiner |
|---|---|---|
| Munich | 13 December 2011 | Vermeulen, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

# EP 2 491 795 A1

## ANNEX TO THE EUROPEAN SEARCH REPORT
## ON EUROPEAN PATENT APPLICATION NO.

EP 11 15 5423

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2011

| Patent document cited in search report | | Publication date | Patent family member(s) | | Publication date |
|---|---|---|---|---|---|
| EP 1129627 | A1 | 05-09-2001 | AT 238687 T | | 15-05-2003 |
| | | | DE 60100219 D1 | | 05-06-2003 |
| | | | DE 60100219 T2 | | 30-10-2003 |
| | | | DK 200000324 A | | 01-09-2001 |
| | | | EP 1129627 A1 | | 05-09-2001 |
| KR 100261352 | B1 | 01-08-2000 | | | |
| CN 101803674 | A | 18-08-2010 | NONE | | |
| US 5140949 | A | 25-08-1992 | NONE | | |
| US 2008044548 | A1 | 21-02-2008 | DE 08828824 T1 | | 30-12-2010 |
| | | | EP 2182813 A1 | | 12-05-2010 |
| | | | ES 2347938 T1 | | 25-11-2010 |
| | | | US 2008044548 A1 | | 21-02-2008 |
| | | | WO 2009029456 A1 | | 05-03-2009 |
| KR 20070046526 | A | 03-05-2007 | NONE | | |
| WO 9110370 | A1 | 25-07-1991 | EP 0509046 A1 | | 21-10-1992 |
| | | | SE 465906 B | | 18-11-1991 |
| | | | SE 9000046 A | | 07-07-1991 |
| | | | WO 9110370 A1 | | 25-07-1991 |
| GB 2420066 | A | 17-05-2006 | NONE | | |

EPO FORM P0459

For more details about this annex : see Official Journal of the European Patent Office, No. 12/82

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5960743 A
- EP 10160306 A
- WO 2006131136 A
- WO 2008055675 A1

**Non-patent literature cited in the description**

- **E.P. BARRETT ; L.G. JOYNER ; P.P. HIENDA.** *J. Am. Chem. Soc.,* 1951, vol. 73, 373